# FASCICULE DE BREVET EUROPEEN

(11) **EP 3 268 680 B1**
(45) Date de publication et mention de la délivrance du brevet: **09.01.2019**
(21) Numéro de dépôt: 16712754.7
(22) Date de dépôt: 14.03.2016
(51) Int. Cl.: F25B 9/14

(54) **REFROIDISSEUR STIRLING AVEC ENTRAÎNEMENT FLEXIBLE DU RÉGÉNÉRATEUR**
STIRLING-KÜHLANLAGE MIT FLEXIBLEM REGENERATORANTRIEB
STIRLING COOLER WITH FLEXIBLE REGENERATOR DRIVE

(30) Priorité: 13.03.2015 FR 1500487
(43) Date de publication de la demande: 17.01.2018
(73) Titulaire: Thales, 92400 Courbevoie (FR)
(72) Inventeur: LE BORDAYS, Julien, 31700 Blagnac (FR)
(74) Mandataire: Lavoix
(86) Numéro de dépôt international: PCT/EP2016/055448
(87) Numéro de publication internationale: WO 2016/146580

(56) Documents cités:
- SU-A1- 1 508 057
- SU-A2- 1 186 903
- US-A- 4 365 982

## Description

La présente invention concerne un refroidisseur fonctionnant selon le cycle de Stirling, du type comprenant : un compresseur avec un piston de compression mobile dans un cylindre de compression, selon un premier axe ; un régénérateur avec un piston de régénération mobile dans un cylindre de régénération, selon un deuxième axe formant un angle avec le premier axe ; un vilebrequin d'entraînement, comprenant un maneton rotatif par rapport au cylindre de compression et/ou au cylindre de régénération, autour d'un troisième axe sensiblement coplanaire au premier axe et sensiblement perpendiculaire au premier et au deuxième axes ; et une bielle de compression, comprenant une tête de bielle montée sur le maneton du vilebrequin et un pied de bielle articulé sur le piston de compression.

Un tel refroidisseur est notamment décrit dans le document US4365982.

De manière connue, le cycle de Stirling comprend les quatre phases suivantes :
- une compression isotherme d'un fluide à une température chaude, obtenue par le déplacement d'un piston de compression dans un cylindre de compression ;
- un refroidissement isochore du fluide, de la température chaude à une température froide, obtenu par passage du fluide à travers un piston de régénération, ledit piston étant en déplacement dans un cylindre de régénération et jouant le rôle d'échangeur thermique ;
- une détente isotherme du fluide à la température froide, obtenue par retour du piston de compression dans le cylindre de compression, et
- un réchauffement isochore du fluide, de la température froide à la température chaude, obtenu par retour du piston de régénération dans le cylindre de régénération.

De manière classique, le piston de régénération est entraîné par le vilebrequin, par l'intermédiaire d'une biellette articulée d'une part sur la bielle de compression et d'autre part sur le piston de régénération.

Ce dispositif nécessite d'être installé avec des jeux très faibles dans les articulations de la biellette, notamment pour réduire les chocs à chaque inversion de sens de déplacement du piston. Les contraintes et des coûts de réalisation sont donc élevés pour les pièces.

La présente invention a pour but de fournir un dispositif assurant l'entraînement mécanique du cylindre de régénération, en diminuant les contraintes et les coûts associés.

A cet effet, l'invention a pour objet un refroidisseur du type précité, dans lequel le piston de régénération est relié au vilebrequin par un élément de liaison comprenant au moins trois tronçons rigides adjacents, reliés par au moins deux liaisons de type ressort, une première extrémité dudit élément de liaison étant montée fixe sur le piston de régénération, une seconde extrémité dudit élément de liaison étant montée fixe sur la tête de la bielle de compression.

Par « liaison de type ressort », on entend une liaison flexible et sans jeu. Comme il sera détaillé dans la description ci-après, d'autres liaisons que des ressorts présentent ces caractéristiques.

Suivant d'autres aspects avantageux de l'invention, le refroidisseur comporte l'une ou plusieurs des caractéristiques suivantes, prises isolément ou suivant toutes les combinaisons techniques possibles :
- les première et seconde extrémités de l'élément de liaison sont disposées de part et d'autre d'un plan formé par le premier axe du piston de compression et le troisième axe du vilebrequin ;
- le deuxième axe du piston de régénération est situé à une distance non nulle du troisième axe du vilebrequin ;
- le troisième axe est disposé entre le deuxième axe et le cylindre de compression ;
- les au moins trois tronçons sont sensiblement rectilignes ;
- les au moins deux tronçons de l'élément de liaison les plus proches du piston de régénération sont disposés sensiblement parallèlement au deuxième axe, et au moins le tronçon le plus proche de la tête de bielle est disposé sensiblement parallèlement au premier axe ;
- les liaisons sont formées par des ressorts de torsion hélicoïdaux ;
- les ressorts hélicoïdaux sont disposés selon des axes parallèles l'un à l'autre ;
- les ressorts hélicoïdaux sont disposés selon des axes perpendiculaires l'un à l'autre.

L'invention sera mieux comprise à la lecture de la description qui va suivre, donnée uniquement à titre d'exemple non limitatif et faite en se référant aux dessins sur lesquels :
- la figure 1 est une vue en coupe d'un refroidisseur selon un mode de réalisation de l'invention ;
- la figure 2 est une vue d'un élément du refroidisseur de la figure 1 ; et
- les figures 3 à 6 sont des vues de variantes de réalisation de l'élément de la figure 2.

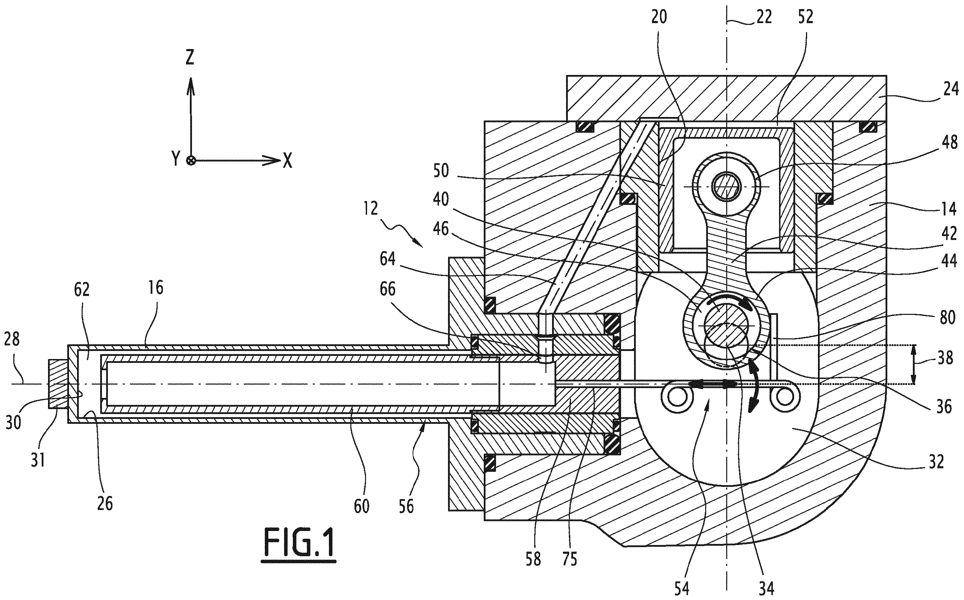

La figure 1 représente une vue en coupe d'un dispositif 10 selon un premier mode de réalisation de l'invention. Le dispositif 10 est un refroidisseur fonctionnant selon le cycle de Stirling. Le dispositif 10 comprend un carter 12. Ledit carter 12 comporte notamment un corps 14 et un puits de cryostat 16, assemblés l'un à l'autre et définissant un volume 18 interne au carter. Le volume interne 18 est préférentiellement rempli d'un gaz à haute pureté tel que de l'hélium.

Dans la suite de la description, on considère une base orthonormée (X, Y, Z).

Le corps 14 du carter définit notamment une première paroi interne 20, de forme cylindrique, disposée selon un premier axe 22 parallèle à Z. Ladite paroi interne 20 est dite cylindre de compression. Le carter 12 comporte en outre un flasque 24 assemblé au corps 14. Le flasque 24 ferme un orifice situé à une première extrémité axiale du cylindre de compression 20.

Le puits de cryostat 16 définit une deuxième paroi interne 26, de forme cylindrique, disposée selon un deuxième axe 28 incliné par rapport au premier axe 22. Dans l'exemple de la figure 1, le deuxième axe 28 est parallèle à X, soit perpendiculaire au premier axe 22. Le deuxième axe 28 est sensiblement coplanaire au premier axe 22.

La deuxième paroi interne 26 est dite cylindre de régénération. Une première extrémité axiale 30 du cylindre de régénération 26, dite extrémité froide, est fermée. De manière classique, l'extrémité froide 30 est au contact d'un élément 31 à refroidir au moyen du dispositif 10, par exemple un composant électronique.

Les deuxièmes extrémités axiales du cylindre de compression 20 et du cylindre de régénération 26 communiquent avec un espace central 32 du carter 12. L'espace central 32 est sensiblement cylindrique, disposé parallèlement à Y.

L'espace central 32 loge un système de vilebrequin 36, relié à un moteur (non représenté). Le vilebrequin 36 comporte un arbre moteur disposé selon un troisième axe 34, parallèle à Y. Le troisième axe 34 est sensiblement coplanaire au premier axe 22. De préférence, comme représenté sur la figure 1, le troisième axe 34 est disposé entre le deuxième axe 28 et le cylindre de compression 20, à une distance 38 non nulle du deuxième axe 28.

Sur l'arbre moteur du vilebrequin 36 est monté fixe un maneton excentrique 40. Le maneton 40 est accouplé à une bielle 42 sensiblement disposée dans le plan (X, Z) contenant les premier et deuxième axes 22, 28.

La bielle 42 est une pièce rigide, comprenant une tête 44 montée sur le maneton 40 par l'intermédiaire d'un palier 46. La bielle 42 comprend en outre un pied 48 articulé à un premier piston 50, dit piston de compression. Le piston de compression 50 est mobile en translation selon le premier axe 22 dans le cylindre de compression 20, qui guide le piston 50 lors de son déplacement.

Le piston de compression 50 définit une chambre de compression 52, située dans le cylindre de compression 20 entre le flasque 24 et ledit piston de compression 50. La chambre de compression 52 a un volume variable en fonction du déplacement du piston 50.

Par l'intermédiaire d'un élément de liaison 54, qui sera décrit ci-après, le maneton excentrique 40 est également relié à un deuxième piston 56, dit piston de régénération. Le piston de régénération 56 est mobile en translation selon le deuxième axe 28 dans le cylindre de régénération 26, qui guide le piston 56 lors de son déplacement.

Le piston de régénération 56 comporte une base 58, ainsi qu'un tube 60 qui s'étend à partir de la base 58 dans le cylindre de régénération 26, en direction de l'extrémité froide 30. Typiquement, l'intérieur du tube 60 est garni d'un matériau poreux (non représenté) apte à l'échange thermique avec un fluide contenu dans le cylindre de régénération 26. Le matériau poreux est par exemple formé d'un empilage de grilles métalliques.

Le piston de régénération 56 définit une chambre de régénération 62, située dans le cylindre de régénération 26 entre l'extrémité froide 30 et ledit piston de régénération 56. La chambre de régénération 62 a un volume variable en fonction du déplacement du piston 56.

Une liaison pneumatique entre la chambre de compression 52 et la chambre de régénération 62 est assurée par exemple par un conduit dont une première partie 64 traverse le carter 12 et une deuxième partie 66 traverse la base 58 du piston de régénération 56.

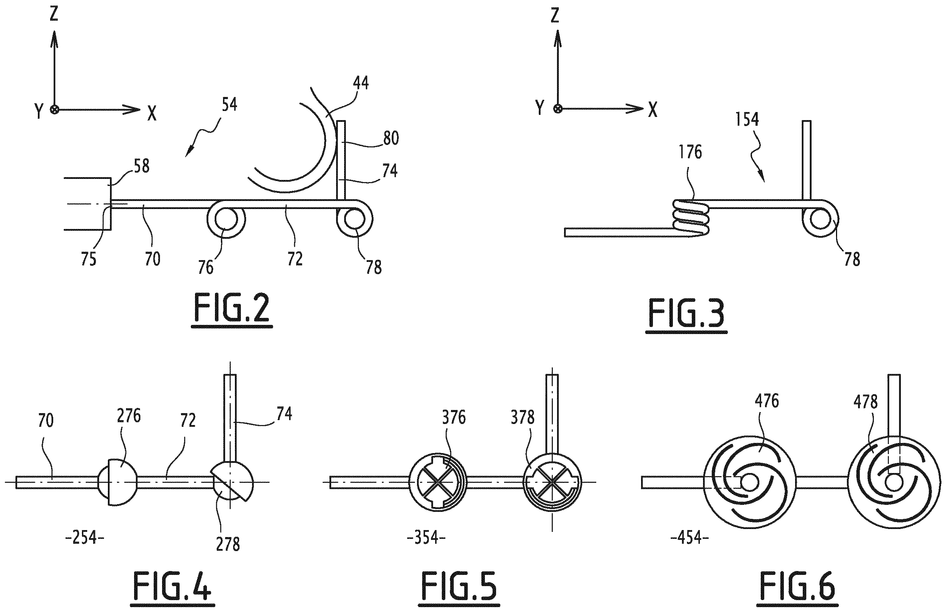

La figure 2 montre une vue de détail de l'élément de liaison 54 qui relie le maneton 40 au deuxième piston 56.

L'élément de liaison 54 comprend trois tronçons adjacents 70, 72, 74, lesdits tronçons étant rigides et sensiblement rectilignes. Une première extrémité 75 d'un premier tronçon 70 est montée fixe sur la base 58 du piston de régénération 56. Le premier tronçon 70 est sensiblement aligné sur l'axe 28 de déplacement du piston 56, parallèlement à X.

Une deuxième extrémité du premier tronçon 70 correspond à une première liaison 76 de type ressort, qui relie le premier tronçon 70 à un deuxième tronçon 72. Comme le premier tronçon 70, le deuxième tronçon 72 est sensiblement parallèle à X.

Une extrémité du deuxième tronçon 72, opposée à la première liaison 76, correspond à une deuxième liaison 78 de type ressort. La deuxième liaison 78 relie le deuxième tronçon 72 à un troisième tronçon 74. Le troisième tronçon 74 est sensiblement disposé parallèlement à Z, soit perpendiculairement au deuxième tronçon 72.

Une extrémité 80 du troisième tronçon 74, opposée à la deuxième liaison 78, est montée fixe sur la tête 44 de la bielle 42. Comme visible sur la figure 1, les extrémités 75 et 80 de l'élément de liaison 54 sont disposées de part et d'autre d'un plan formé par le premier axe 22 du piston de compression et le troisième axe 34 du vilebrequin. En d'autres termes, l'élément de liaison 54 est fixé à la bielle 42 sensiblement à l'opposé d'une zone habituelle de fixation de la bielle du piston de régénération dans les dispositifs de l'art antérieur.

Dans l'exemple des figures 1 et 2, l'élément de liaison 54 est formé d'une tige métallique enroulée sur elle-même au niveau des liaisons 76, 78, de manière à former des ressorts de torsion au niveau desdites liaisons. Chacun desdits ressorts 76, 78 est hélicoïdal, disposé selon un axe parallèle à Y.

La figure 3 montre une variante 154 de l'élément 54 des figures 1 et 2. L'élément 154 est similaire à l'élément 54 décrit ci-dessus, à l'exception de la première liaison 176 qui forme un ressort hélicoïdal disposé selon un axe parallèle à Z. La deuxième liaison 78 est disposée parallèlement à Y, comme dans l'élément 54 de la figure 2.

Les figures 4, 5 et 6 montrent des variantes 254, 354 et 454 aux éléments de liaison 54 et 154 des figures 1, 2 et 3. Comme dans les exemples précédents, les éléments 254, 354 et 454 comportent trois tronçons adjacents 70, 72, 74 rigides et sensiblement rectilignes. Les deux premiers tronçons 70, 72 sont sensiblement parallèles à X et le troisième tronçon 74 est sensiblement parallèle à Z.

Les tronçons adjacents 70, 72 et 72, 74 sont respectivement reliés par des liaisons de type ressort. Dans l'exemple 254 de la figure 4, les liaisons 276, 278 sont des paliers magnétiques de type pivot et/ou rotule. Dans l'exemple 354 de la figure 5, les liaisons 376, 378 sont des flex pivots. Dans l'exemple 454 de la figure 6, les liaisons 476, 478 sont des paliers flexibles.

Les éléments 154, 254, 354 et 454 décrits ci-dessus sont aptes à remplacer l'élément de liaison 54 dans le dispositif 10 de la figure 1, pour un fonctionnement similaire.

Un procédé de fonctionnement du dispositif 10 va maintenant être décrit, selon les étapes connues en tant que telles d'un cycle de Stirling.

Le maneton excentrique 40 est entraîné en rotation par l'arbre moteur du vilebrequin 36, autour de l'axe 34. Par l'intermédiaire de la bielle 42, la rotation du maneton 40 est transformée en mouvement rectiligne alternatif du piston de compression 50, selon le premier axe 22.

Par ailleurs, par l'intermédiaire de l'élément de liaison 54, la rotation du maneton 40 est convertie en mouvement rectiligne alternatif du piston de régénération 56, selon le deuxième axe 28.

Les liaisons ressort 76, 78 permettent à l'élément de liaison 54 de convertir avec souplesse le mouvement de la tête de bielle 44 en mouvement rectiligne du piston 56, guidé par le cylindre de régénération 26. Les liaisons ressort 76, 78 éliminent les problèmes liés à un système classique d'entraînement par bielle, notamment les chocs générés par les jeux mécaniques.

Les mouvements des pistons 50, 56 sont de type quasi-sinusoïdal. Les mouvements des pistons 50, 56 sont déphasés l'un de l'autre d'environ 90°, c'est-à-dire que l'un des deux pistons 50, 56 est à mi-course lorsque l'autre desdits deux pistons est à une extrémité de sa course.

Par exemple, on considère que le piston de compression 50 se déplace selon le premier axe 22, en direction du flasque 24. Dans la configuration représentée à la figure 1, la chambre de compression 52 a presque atteint son volume minimal. L'hélium contenu dans ladite chambre atteint une plage maximale de pression et est chassé dans le piston de régénération 56 par le conduit 64, 66. Ledit piston de régénération est alors sensiblement à mi-course dans le cylindre de régénération 26 et se déplace en direction opposée à l'extrémité froide 30.

L'hélium traverse le tube 60 du piston 56 et refroidit au contact de l'échangeur thermique contenu dans ledit tube. Le piston de régénération 56 poursuit sa course dans le cylindre de régénération 26 jusqu'à une expansion maximale de la chambre de régénération 62. Par ailleurs, le piston de compression 50 se déplace dans le cylindre de compression 20 de manière à augmenter le volume de la chambre de compression 52, diminuant la pression de l'hélium. Le retour du piston de régénération 56, combiné à la poursuite de l'expansion de volume de la chambre de compression 52, conduit l'hélium à traverser en sens inverse le tube 60. L'hélium récupère alors de la chaleur et remonte en température, avant de retourner dans la chambre de compression 52 par l'intermédiaire du conduit 64, 66. Le piston de compression 50 poursuit sa course jusqu'à une expansion maximale de la chambre de compression 52, puis repart en sens inverse pour comprimer à nouveau le fluide et compléter le cycle.

La distance 38 entre le deuxième axe 28 et le troisième axe 34 permet le mouvement du piston 56 dans le cylindre de régénération 26 par l'intermédiaire de l'élément 54, sans que le vilebrequin 36 ne génère un encombrement. Il est ainsi possible de gagner en compacité du puits de cryostat 16 selon le deuxième axe 28.

De préférence, un procédé de montage du dispositif 10 est tel que, hors fonctionnement du moteur entraînant le maneton 40, les liaisons ressort 76, 78 sont sensiblement sans effort installé. Ainsi, en cours de fonctionnement, les efforts dans les liaisons 76, 78 sont uniquement induits par le déplacement des éléments du dispositif 10.

Selon une variante de réalisation non représentée, la liaison pneumatique entre la chambre de compression 52 et la chambre de régénération 62 est assurée par un conduit comprenant un tuyau déformable, disposé dans l'espace central 32. Par exemple, les extrémités du tuyau sont raccordées à des piquages dans les pistons 50 et 56. Le tuyau est souple ou formé de tronçons rigides raccordés par des zones flexibles, de manière à se déformer selon les mouvements des pistons 50 et 56.

## Revendications

1. Refroidisseur (10) fonctionnant selon le cycle de Stirling, comprenant :
- un compresseur avec un piston de compression (50) mobile dans un cylindre de compression (20), selon un premier axe (22) ;
- un régénérateur avec un piston de régénération (56) mobile dans un cylindre de régénération (26), selon un deuxième axe (28) formant un angle avec le premier axe ;
- un vilebrequin (36) d'entraînement, comprenant un maneton (40) rotatif par rapport au cylindre de compression et/ou au cylindre de régénération, autour d'un troisième axe (34) sensiblement coplanaire au premier axe et sensiblement perpendiculaire au premier et au deuxième axes ; et
- une bielle (42) de compression, comprenant une tête de bielle (44) montée sur le maneton du vilebrequin et un pied de bielle (48) articulé sur le piston de compression ;
**caractérisé en ce que** le piston de régénération est relié au vilebrequin par un élément de liaison (54) comprenant au moins trois tronçons (70, 72, 74) rigides adjacents, reliés par au moins deux liaisons (76, 78) de type ressort, une première extrémité (75) dudit élément de liaison étant montée fixe sur le piston de régénération, une seconde extrémité (80) dudit élément de liaison étant montée fixe sur la tête de la bielle de compression.

2. Refroidisseur selon la revendication 1, dans lequel les première (75) et seconde (80) extrémités de l'élément de liaison (54) sont disposées de part et d'autre d'un plan formé par le premier axe (22) du piston de compression et le troisième axe (34) du vilebrequin.

3. Refroidisseur selon la revendication 1 ou la revendication 2, dans lequel le deuxième axe (28) du piston de régénération est situé à une distance (38) non nulle du troisième axe (34) du vilebrequin.

4. Refroidisseur selon la revendication 3, dans lequel le troisième axe (34) est disposé entre le deuxième axe (28) et le cylindre de compression (20).

5. Refroidisseur selon l'une des revendications précédentes, dans lequel les au moins trois tronçons (70, 72, 74) sont sensiblement rectilignes.

6. Refroidisseur selon la revendication 5, dans lequel :
- les au moins deux tronçons (70, 72) de l'élément de liaison (54), les plus proches du piston de régénération (56) sont disposés sensiblement parallèlement au deuxième axe (28), et
- au moins le tronçon (74) le plus proche de la tête de bielle (44) est disposé sensiblement parallèlement au premier axe (22).

7. Refroidisseur selon l'une des revendications précédentes, dans lequel les liaisons (76, 78) sont formées par des ressorts de torsion hélicoïdaux.

8. Refroidisseur selon la revendication 7, dans laquelle les ressorts hélicoïdaux sont disposés selon des axes parallèles l'un à l'autre.

9. Refroidisseur selon la revendication 7, dans laquelle les ressorts hélicoïdaux sont disposés selon des axes perpendiculaires l'un à l'autre.

## Patentansprüche

1. Kühleinrichtung (10), die gemäß dem Stirling-Kreisprozess arbeitet, aufweisend:
- einen Verdichter mit einem Verdichtungskolben (50), der in einem Verdichtungszylinder (20) entlang einer ersten Achse (22) bewegbar ist,
- einen Zwischenregenerator mit einem Regenerationskolben (56), der in einem Regenerationszylinder (26) entlang einer zweiten Achse (28) bewegbar ist, die mit der ersten Achse einen Winkel bildet,
- eine Antriebs-Kurbelwelle (36), die aufweist einen Zapfen (40), der bezüglich des Verdichtungszylinders und/oder des Regenerationszylinders drehbar ist um eine dritte Achse (34), die im Wesentlichen komplanar zu der ersten Achse und im Wesentlichen senkrecht ist zu der ersten und der zweiten Achse, und
- eine Verdichtungsstange (42), die aufweist einen Stangenkopf (44), der an den Zapfen der Kurbelwelle montiert ist, und einen Stangenfuß (48), der mit dem Verdichtungskolben gelenkverbunden ist,
**dadurch gekennzeichnet, dass** der Regenerationskolben mit der Kurbelwelle verbunden ist über ein Verbindungselement (54), das wenigstens drei starre benachbarte Abschnitte (70, 72, 74) aufweist, die über wenigstens zwei Verbindungen (76, 78) vom Feder-Typ verbunden sind, wobei ein erstes Ende (75) des Verbindungselements fest an dem Regenerationskolben montiert ist und ein zweites Ende (80) des Verbindungselements fest an dem Kopf der Verdichtungsstange montiert ist.

2. Kühleinrichtung gemäß Anspruch 1, wobei das erste (75) und das zweite (80) Ende des Verbindungselements (54) beiderseits einer Ebene angeordnet sind, die von der ersten Achse (22) des Verdichtungskolbens und der dritten Achse (34) der Kurbelwelle gebildet ist.

3. Kühleinrichtung gemäß Anspruch 1 oder Anspruch 2, wobei die zweite Achse (28) des Regenerationskolbens in einem Abstand (38) ungleich null von der dritten Achse (34) der Kurbelwelle angeordnet ist.

4. Kühleinrichtung gemäß Anspruch 3, wobei die dritte Achse (34) zwischen der zweiten Achse (28) und dem Verdichtungszylinder (20) angeordnet ist.

5. Kühleinrichtung gemäß einem der vorhergehenden Ansprüche, wobei die wenigstens drei Abschnitte (70, 72, 74) im Wesentlichen geradlinig sind.

6. Kühleinrichtung gemäß Anspruch 5, wobei:
- wenigstens die zwei Abschnitte (70, 72) des Verbindungselements (54), die dem Regenerationskolben (56) am nächsten sind, im Wesentlichen parallel zu der zweiten Achse (28) angeordnet sind, und
- wenigstens der Abschnitt (74), der dem Stangenkopf (44) am nächsten ist, im Wesentlichen parallel zu der ersten Achse (22) angeordnet ist.

7. Kühleinrichtung gemäß irgendeinem der vorhergehenden Ansprüche, wobei die Verbindungen (76, 78) von Torsionsschraubenfedern gebildet sind.

8. Kühleinrichtung gemäß Anspruch 7, wobei die Schraubenfedern entlang von zueinander parallelen Achsen angeordnet sind.

9. Kühleinrichtung gemäß Anspruch 7, wobei die Schraubenfedern entlang von zueinander senkrechten Achsen angeordnet sind.

## Claims

1. A cooler (10) operating according to the Stirling cycle, comprising:
- a compressor with a movable compression piston (50) that can move within a compression cylinder (20) along a first axis (22);
- a regenerator with a movable regeneration piston (56) that can move within a regeneration cylinder (26) along a second axis (28) that forms an angle with the first axis;
- a driving crankshaft (36), comprising a rotatable crank pin (40), that can rotate relative to the compression cylinder and/or the regeneration cylinder, about a third axis (34) that is substantially coplanar to the first axis and substantially perpendicular to the first and second axes; and
- a compression connecting rod (42), comprising a connecting rod head (44) mounted on the crank pin of the crankshaft and a connecting rod foot (48) that is articulated on the compression piston;
**characterised in that** the regeneration piston is connected to the crankshaft by a link element (54) comprising at least three adjacent rigid sections (70, 72, 74), connected by at least two spring-type links (76, 78), a first end (75) of the said link element being mounted in a fixed manner on the regeneration piston, a second end (80) of the said link element being mounted in a fixed manner on the head of the compression connecting rod.

2. A cooler according to claim 1, in which the first (75) and second (80) ends of the link element (54) are disposed on either side of a plane formed by the first axis (22) of the compression piston and the third axis (34) of the crankshaft.

3. A cooler according to claim 1 or claim 2, in which the second axis (28) of the regeneration piston is located at a non-zero distance (38) from the third axis (34) of the crankshaft.

4. A cooler according to claim 3, in which the third axis (34) is disposed between the second axis (28) and the compression cylinder (20).

5. A cooler according to one of the preceding claims, in which the at least three sections (70, 72, 74) are substantially rectilinear.

6. A cooler according to claim 5, in which:
- the at least two sections (70, 72) of the link element (54) that are closest to the regeneration piston (56) are disposed to be substantially parallel to the second axis (28); and
- at least the section (74) that is closest to the head of the connecting rod (44) is disposed to be substantially parallel to the first axis (22).

7. A cooler according to one of the preceding claims, in which the links (76, 78) are formed by helical torsion springs.

8. A cooler according to claim 7, in which the helical coil springs are disposed along axes that are parallel to one another.

9. A cooler according to claim 7, in which the helical coil springs are disposed along axes that are perpendicular to one another.
